(19) Europäisches Patentamt

European Patent Office

Office européen des brevets

(11) **EP 1 662 229 A1**

(12) **EUROPEAN PATENT APPLICATION**

(43) Date of publication:
**31.05.2006 Bulletin 2006/22**

(51) Int Cl.:
*G01C 21/12* (2006.01)  *B63C 11/02* (2006.01)

(21) Application number: **05110937.9**

(22) Date of filing: **18.11.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **29.11.2004 IT BO20040740**

(71) Applicants:
• **Marini, Fabio**
  **63033 Monteprandone (AP) (IT)**
• **Lodi, Andrea**
  **40024 Castel San Pietro Terme (BO) (IT)**
• **Garofalo, Pietro**
  **95123 Catania (IT)**

(72) Inventors:
• **BAER, Nikolaus**
  **93924, CARMEL VALLEY (US)**
• **MARINI, Fabio**
  **63033, MONTEPRANDONE  AP (IT)**
• **LODI, Andrea**
  **40024, CASTEL SAN PIETRO TERME   BO (IT)**
• **FAETANI, Sara**
  **40132, BOLOGNA (IT)**

(74) Representative: **Modiano, Micaela Nadia et al**
  **Dr. Modiano & Associati S.p.A.**
  **Via Meravigli 16**
  **20123 Milano (IT)**

(54) **Portable unit for determining the position with respect to a reference, particularly for substantially shielded environments**

(57)     A portable unit (1) for detecting a position with respect to a reference, particularly for substantially shielded environments, comprising a suitable power supply element. The unit comprises a control and processing processor (2), a device (3) for three-dimensional orientation with respect to geographical references, at least one accelerometer (4), a screen (5), a memory component (6) and respective data input (7a) and output (7b) interfaces (7). The processor (2) is preset by the user by means of the input interface (7a) and is adapted to process instantaneously the data supplied during use by the orientation device (3) and by the at least one accelerometer (4), displaying the processing on the screen (5) and storing it in the memory component (6).

Fig. 1

EP 1 662 229 A1

**Description**

The present invention relates to a portable unit for determining the position with respect to a reference, particularly for substantially shielded environments, i.e., where the high-frequency GPS signal cannot reach.

Environments of this type certainly include the submarine environment, but other environments, such as subterranean cavities, also have the same problem related to determining geographical location.

Position coordinates are currently derived, substantially by mental approximation, by a submerged scuba diver by relying on a compass; however, only very simple navigations are possible in this way.

Without references in water, such as rocks or vegetation, what can be done with a compass is only follow a certain direction until the destination is reached and then reverse the direction of travel in order to follow the path back toward the starting point. Along straight paths, once the end of the outgoing path has been reached, it is necessary to set the reverse route on the compass in order to trace the return path. If these paths are followed at a depth that is greater than the depth of visibility in water, it is not possible to identify the contour of the vessel which stands out against the surface at the arrival point: it is therefore impossible to identify uniquely the arrival point at the end of the return path (any contrasting currents may affect timings, accelerating the rate of travel during the outgoing trip and slowing it during return, or vice versa).

One simple but not always accurate method for calculating distances is the use of fin stroke cycles. One cycle is equal to two fin stroke movements for each leg, i.e., a cycle is completed when the legs return to the initial position.

Knowing in advance the average distance covered with a fin stroke cycle allows to determine, by counting the cycles, the distance covered during the dive; in order to determine this average distance, it is sufficient to divide the length of a preset determined path by the cycles required to complete it by using fin strokes at the same rate and in a constant manner.

At sea, one must consider the direction and intensity of the current, which can affect the distance covered, reducing it if the current is directed against the fin stroke direction or increasing it if the current is directed in the same direction. Moreover, the rate of travel of the pair must be adjusted to the slowest scuba diver.

The aim of the present invention is to obviate the cited drawbacks and meet the mentioned requirements, by providing a portable unit for determining the position with respect to a reference, particularly for substantially shielded environments, which is suitable to provide the coordinates of the point where it is located despite not being connected to the satellite of the Global Positioning System (GPS).

Within this aim, an object of the present invention is to become independent of the subjective component, which invalidates with severe errors the determination of the target to be reached, thus allowing the user to define the course to be followed before entering the substantially shielded environment.

Another object of the present invention is to provide a structure which is simple, relatively easy to use, safe in use and effective in operation.

This aim and these objects are achieved by the present portable unit for detecting the position with respect to a reference, particularly for substantially shielded environments, which comprises a power supply element, characterized in that it comprises a control and processing processor, a device for three-dimensional orientation with respect to geographical references, at least one accelerometer, a screen, a memory component and respective data input and output interfaces, said processor being adapted to be preset by the user by way of said input interface and being adapted to process instantaneously the data supplied during use by said orientation device and by said at least one accelerometer, displaying said processing on the screen and storing said processing in the memory component.

Further characteristics and advantages of the invention will become better apparent from the following detailed description of a preferred but not exclusive embodiment of a portable unit for detecting the position with respect to a reference, particularly for substantially shielded environments, illustrated by way of non-limiting example in the accompanying drawings, wherein:

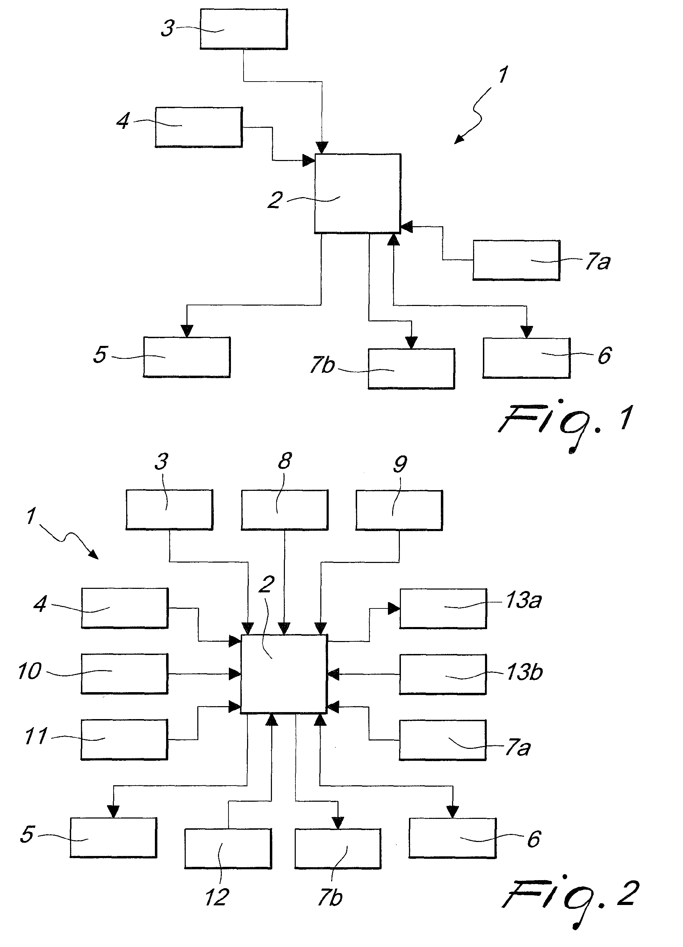

Figure 1 is a block diagram of a portable unit according to the invention;
Figure 2 is a block diagram of the connections among the various components, including some accessory components, of a unit according to the invention;

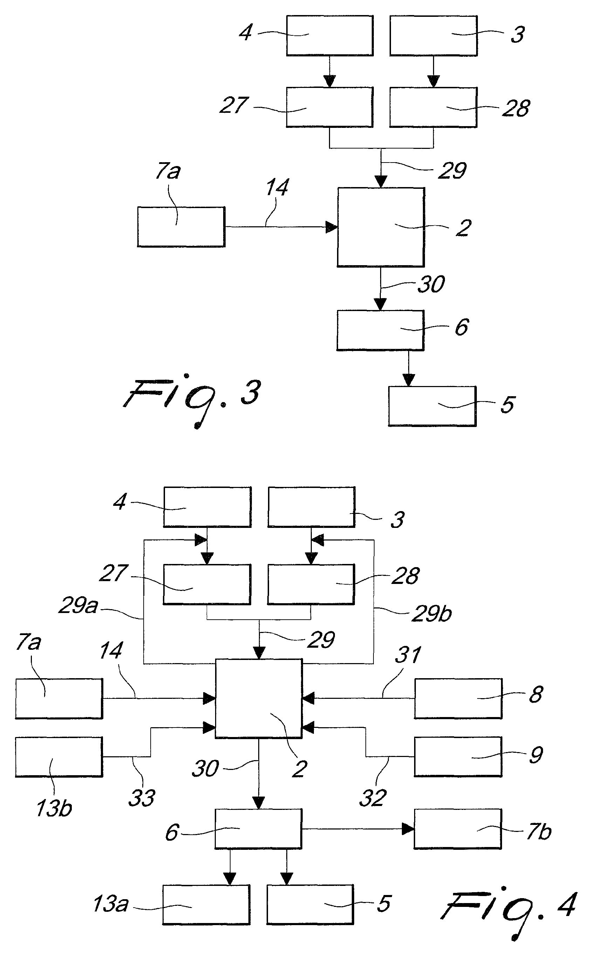

Figure 3 is a functional block diagram of the flow of data among the various components of a unit according to the invention;
Figure 4 is a functional block diagram of the flow of data among the various components, including some accessory components, of a unit according to the invention;

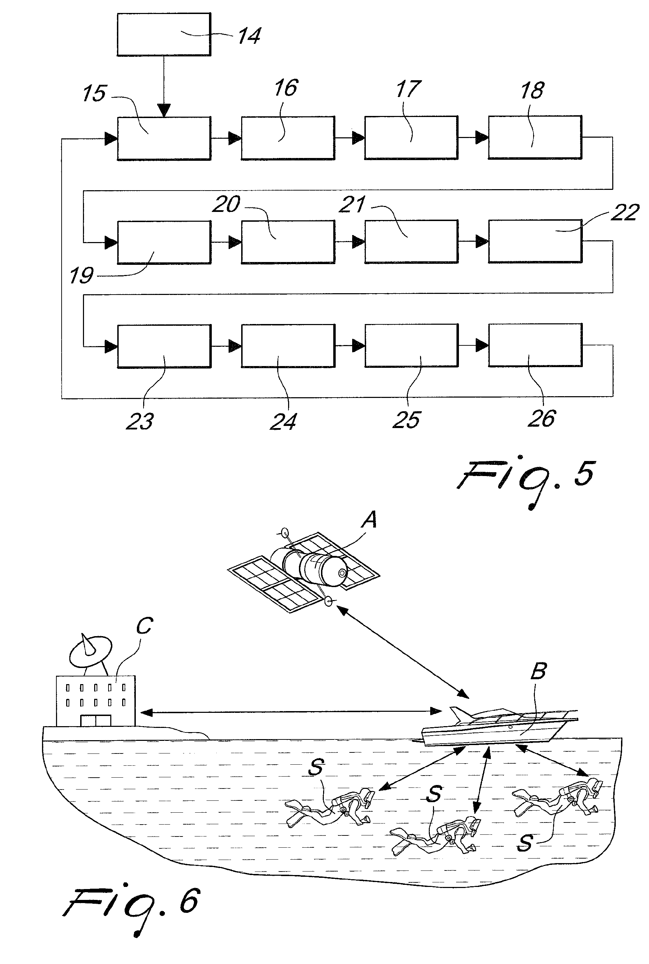

Figure 5 is a flowchart of the detection and data processing method of a unit according to the invention;
Figure 6 is a functional diagram of the connection between a unit 1 according to the invention, the support vessel, and the fixed references constituted by the GPS satellites and by the harbor.

With reference to the figures, the reference numeral 1 generally designates a portable unit for detecting the position with respect to a reference, particularly for substantially shielded environments.

The portable unit 1 has the smallest possible dimensions, so that it can be worn (for example for underwater activity) on the wrist.

Each unit 1 is provided with a respective power supply element, which is generally a backup battery, possibly of the rechargeable type: in this case, the unit must comprise an input for the connector leading to the electric power supply required for recharging, which can be conveniently sealed during the dive, or the rechargeable battery must be removable in order to perform recharging externally.

The unit 1 further comprises a control and processing processor 2 (generally a microprocessor), a device 3 for three-dimensional orientation with respect to geographical references, at least one accelerometer 4, a screen 5, a memory component 6 and respective interfaces 7 for data input 7a and data output 7b.

The device 3 and the accelerometer 4 constitute an inertial position sensor, which is connected directly to the moving body and provides in output a signal which is a function of the movement performed with respect to an initial reference. The movement can be of the translational type, detected by way of the accelerometer 4, or rotational, detected by way of the device 3. In order to assess completely the movement of a body, i.e., of its six degrees of freedom, it is possible to use two methods: one is to combine the use of the accelerometers for determining the three degrees of translational motion with the use of devices 3 of the type for determining the three degrees of rotation; another method is the one which uses the differential accelerations measured by means of two or more accelerometers subjected to the same rotary motion but located at different distances from the center of rotation.

The processor 2 must be preset by the user by means of the input interface 7a: the input interface 7a is a keypad, by means of which the user can enter the coordinates of the starting point (in order to always have the exact indication of his position) and optionally of the target to be reached in order to follow the shortest route. Optionally, the input interface 7a can also comprise a port for wireless connection with a GPS device provided at the reference point, in order to download directly from such device the coordinates of the starting point.

During the use of the unit 1, the processor 2 processes instantaneously the data supplied by the orientation device 3 and by the at least one accelerometer 4, displaying such processing on the screen 5 and storing it in the memory component 6.

The memory component 6 can also be integrated in the processor 2 (which normally comprises a memory, generally of the volatile type, required for processing the information). Optionally, the memory component 6 can also comprise an additional memory (of the type with a removable or permanently inserted card), which is intended to record the path covered, in order to be able to reconstruct it subsequently in order to acquire interesting points that have been identified en route.

The unit 1 can also comprise a temperature sensor 8 and a depth gauge 9.

The sensor 9 supplies the processor 2 with data useful for thermal compensation, in order to eliminate the thermal drift of the signals supplied by the device 3 and by the accelerometer 4, while the depth gauge 9 supplies the processor 2 with data useful for instantaneous comparison of the data related to the vertical coordinate, which are provided by the accelerometer 4 and by the device 3.

The accelerometer 4 is of the type for three-dimensional sensing: substantially, said apparatus is capable of recording accelerations that have occurred along the three directions identified by a perpendicular spatial reference system; said reference system of the accelerometer 4 (which can move in space with six degrees of freedom) can be referred instantly to the geographical reference system (which is fixed) by way of the presence of the device 3 and of the processor 2 which processes the corresponding data.

An accelerometer 4 with three-dimensional sensing can also be constituted by three accelerometers with one-dimensional sensing (or by a one-dimensional accelerometer and a two-dimensional accelerometer), arranged with mutually perpendicular sensing directions.

For a further improvement of sensing, it is optionally possible to insert at least one additional accelerometer for comparing the data related to the common sensing directions. For example, Figure 2 considers the inclusion of three accelerometers 10, 11 and 12.

Underwater, the effect of Earth gravity on the human body is weaker than on land. Further, the movement of the scuba diver in the water is contrasted by the fluid in which he is immersed and is characterized by a speed on the order of 25 meters per minute. The phenomenon being studied therefore has an acceleration which is generally less than 1 g.

Accordingly, the accelerometer 4 which acts as a sensor and transducer for the acceleration of the scuba diver can be chosen so that it senses accelerations of no more than 2 g, although it must be able to absorb much larger sudden shocks.

In addition to good resolution, it would of course be convenient to have good sensitivity, so that small variations of the value to be measured are matched by larger variations of the output value. In this manner, the instrument becomes sensitive even to small intervals of variation of the input signal.

Subsequently, it is necessary to evaluate the natural frequency of the phenomenon, since on the basis of this frequency it is necessary to choose the speed of the reference pulse of the processor 2 and the bandwidth of the accelerometer 4; both of these parameters affect the resolution of the apparatus, i.e., the smallest acceleration that it is capable of sensing. Human movement can be measured on average at 15 Hz or less. In any case, in the water the frequency involved in movement is 3-4 times lower than the frequency in air, and therefore the unit does not have to detect such rapid movement variations.

Temperature is another value that has to be taken into account, since the efficiency of an accelerometer 4 is affected by the degrees of the environment that surrounds the sensor.

For example, the common noise of accelerometers 4 is directly proportional to the bandwidth that is used and inversely proportional to the square root of the natural frequency of the phenomenon, and therefore it is essential to use the smallest possible bandwidth, stopping it at the highest frequency of the phenomenon being considered. In this way, it is possible to maximize the resolution and dynamic range of the accelerometer.

An accelerometer 4 suitable for this use can utilize an MEMS (Micro Electro Mechanical System) logic.

The device 3 for three-dimensional orientation with respect to geographical references can be constituted by (or can also merely comprise) a gyroscope, a compass or both devices.

A device 3 for orientation with three-dimensional sensing can also be constituted by three devices with one-dimensional sensing (or by a one-dimensional device and a two-dimensional device) arranged with mutually perpendicular sensing directions.

The unit 1 may further comprise a transceiver 13 for sound pulses and echoes, known as sonar, for connection to the support vessel, if any, when it is used underwater.

The unit 1, in order to acquire and process data, applies a method which consists in entering the coordinates of the starting point 14 by way of the data input interface 7a; the periodic updating cycle 15 occurs after input.

First of all, it is necessary to acquire instantaneously the data 16 and 17, by means of the depth gauge 9, if provided, the at least one accelerometer 4, the device 3 for three-dimensional orientation with respect to geographical references, the sonar receiver 13b, if any, and the optional temperature sensor 8.

Once these data have been acquired, the processor 2 must perform a thermal compensation 18 (by utilizing the data of the temperature sensor 9) of the data supplied by the accelerometer 4 and by the device 3, at the end of which the stream of information is subjected to digital filtering 19 in order to eliminate any noise.

Only at this point it is possible to process 20 the data supplied by the accelerometer 4, performing an optional compensation 21 of the data related to the vertical axis by way of the data supplied by the depth gauge 9.

The result of the processing 20 (compensated along the vertical axis 21) is subjected to error correction 22 by calculating the distance from the initial reference point by using the sonar transceiver 13. If the speed of the sound wave in water is known, it is possible to calculate the distance from the initial reference point on the basis of the propagation time of a round trip of an acoustic signal transmitted by the transmitter 13a, transmitted back by the reference point and received by the receiver 13b. The same acoustic signal used for error compensation can be used for transmitting to the reference point data which comprise the geographical coordinates of the user. This information can be used by personnel located at the reference point in order to monitor and, if necessary, rescue the submerged scuba divers.

The correction 22, generally termed dynamic synchronization, is performed before the position sensor is stored 23 in the memory component 6.

The stored data 23 are displayed 24 on the screen 5 and are optionally transmitted 25 via the sonar transmitter 13a, completing 26 the cycle.

The method is then applied sequentially in order to determine instantaneously the position with respect to the reference set in step 14.

The instantaneous position is calculated by means of the processor 2 by applying the following formulas to the acquired data:

$$x(t) = x_0 + V_{0x} * t + 1/2\ a_x * t^2$$

$$y(t) = y_0 + V_{0y} * t + 1/2\ a_y * t^2$$

$$z(t) = z_0 + V_{0z} * t + 1/2\ a_z * t^2$$

where $x_0$, $y_0$ and $z_0$ are the initial coordinates input by the user in step 14 of the method, $V_{0x}$, $V_{0y}$ and $V_{0z}$ are the initial speeds, and $a_x$, $a_y$ and $a_z$ are the sensed accelerations.

It should be noted that when the initial coordinates are input, said coordinates are zero and are updated at each cycle according to the following formulas:

$$V_x(t_n) = V_{0x} + a_{x(n)} * t_n$$

$$V_y(t_n) = V_{0y} + a_{y(n)} * t_n$$

$$V_z(t_n) = V_{0z} + a_{z(n)} * t_n$$

where $V_{0x}$, $V_{0y}$ and $V_{0z}$ are the speeds detected at the instant $t_{n-1}$, while $a_{x(n)}$, $a_{y(n)}$ and $a_{z(n)}$ are the instantaneous accelerations of the instant $t_n$.

Actually, speed and position can also be obtained by instantaneous integration of the sensed acceleration.

The data related to the instantaneous position are also sent by means of the acoustic signal transmitter 13a to the support vessel B for correct location of the underwater user S with respect to the satellite signals A and the signals of an optional beacon C, in order to facilitate search and rescue operations.

The operation of the invention is as follows: by way of the input interface 7a, the user performs manual synchronization 14.

The sensing of the environmental conditions by the accelerometer 4 and the device 3 entails that the signal in output from these devices passes through a respective filter 27 and 28 in order to attenuate noise before it is input 29 to the processor 2.

These data 29, by applying the previously cited formulas, allow to obtain the kinematic data 30 at the output of the processor 2, said data being stored 23 in the component 6 and displayed 24 on the screen 5.

If a unit which also has all the auxiliary devices mentioned earlier is considered, the processor 2 receives from the temperature sensor 8 the corresponding data 31 for performing thermal compensation of the data 29 and receives from the depth gauge 9 the data 32 for performing compensation of the vertical coordinate of the data 29.

These compensations provide respective signals, which replace the signals in output from the accelerometer 4 (stream 29a) and the signals in output from the device 3 (stream 29b).

The presence of an acoustic wave receiver 13b (connected for example to a transmitter provided on the vessel) provides the processor 2 with a data stream 33 useful for error compensation based on the distance from the reference point.

The kinematic data 30 related to the instantaneous position can be supplied not only to the screen 5 but also by the component 6 to the sound wave transmitter 13a (which is connected to the vessel, in this case optionally also with a deferred link) to the data output interface 7b for the transfer of all the stored information on an external device (e.g., a personal computer).

The present unit 1 supplies the global positioning coordinates to a user who is in environments in which it is not possible to connect to a satellite. The primary recipients of this product are scuba divers, who use very simple navigation instruments below the surface of the sea. The reasons why this is an important addition to the equipment of a scuba diver are the following: the diving time of a scuba diver is extremely constrained by his air supply and by the limited time for which he can stay at considerable depths. Any device which improves the quantity or quality of the time spent in marine depths is very interesting.

It is possible to add the functions provided by the present unit 1 to the normal functions of an underwater computer. With such unit, scuba divers can locate destinations more rapidly in the case of the wreck of a ship, of search points and of their own vessel. Scuba divers can record, recommend and locate specific GPS coordinates instead of following the conventional procedures, which use only the compass and the sense of direction of the user.

A GPS apparatus has been provided in which the functions are based on the relative movement of the scuba diver with respect to the vessel. First of all, the scuba diver synchronizes his unit 1 with the GPS coordinate of the vessel; this can occur manually, by acting directly on the buttons of his wrist set, after reading the GPS position on the display of the onboard device.

Once in the water, the unit 1 tracks the movements of the scuba diver with respect to the initial synchronization point, i.e., it is aware in each instant of the underwater movement of its user and deducts his position with respect to the initial coordinate and accordingly provides the instantaneous GPS position of the scuba diver. Further, if the GPS coordinates of a possible underwater destination to be reached are known and set beforehand, the scuba diver can swim so as to be guided toward it. His movement is tracked, by way of the unit 1, on the screen 5 and the destination point and the current location of the scuba diver are displayed simultaneously. Another operating method is the use of free diving without devices on the vessel. The scuba diver sets his initial coordinates as (0, 0, 0) and starts the dive by tracking his own movement with respect to the initial point, allowing easier return to the vessel.

It has thus been shown that the invention achieves the proposed aim and objects.

The invention thus conceived is susceptible of numerous modifications and variations, all of which are within the scope of the appended claims.

All the details may further be replaced with other technically equivalent ones.

In the examples of embodiment that have been shown, individual characteristics, given in relation to specific examples, may actually be interchanged with other different characteristics which exist in other examples of embodiment.

Moreover, it is noted that anything found to be already known during the patenting process is understood not to be claimed and to be the subject of a disclaimer.

In practice, the materials used, as well as the shapes and the dimensions, may be any according to requirements without thereby abandoning the scope of the protection of the appended claims.

The disclosures in Italian Patent Application No. BO2004A000740 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

**Claims**

1.  A portable unit for detecting a position with respect to a reference, particularly for substantially shielded environments, comprising a power supply element, **characterized in that** it comprises a control and processing processor (2), a device (3) for three-dimensional orientation with respect to geographical references, at least one accelerometer (4), a screen (5), a memory component (6) and respective data input (7a) and output (7b) interfaces (7), said processor (2) being adapted to be preset by the user by means of said input interface (7a) and being adapted to process instantaneously data supplied during use by said orientation device (3) and by said at least one accelerometer (4), displaying said processing on the screen (5) and storing said processing in the memory component (6).

2.  The unit according to claim 1, **characterized in that** it also comprises a temperature sensor (8), which is connected to said processor (2) for thermal compensation of the data.

3.  The unit according to claim 1, **characterized in that** it also comprises a depth gauge (9), which is connected to said processor (2) for instantaneous comparison of data related to a vertical coordinate, which are supplied by the at least one accelerometer (4) and by the orientation device (3).

4.  The unit according to claim 1, **characterized in that** said at least one accelerometer (4) is of the type for three-dimensional sensing.

5.  The unit according to claim 4, **characterized in that** said accelerometer with three-dimensional sensing is constituted by at least two accelerometers which are at least one-dimensional and are arranged with mutually perpendicular sensing directions.

6.  The unit according to claim 4, **characterized in that** in addition to said accelerometer (4) with three-dimensional sensing there is also at least one additional accelerometer (10, 11, 12) for comparing data related to common sensing directions.

7.  The unit according to claim 1, **characterized in that** said device (3) for three-dimensional orientation with respect to geographical references comprises a gyroscope.

8.  The unit according to claim 1, **characterized in that** said device (3) for three-dimensional orientation with respect to geographical references comprises a compass.

9.  The unit according to claim 1, **characterized in that** said data input interface (7a) is a keypad suitable for entering the coordinates of the starting point.

10. The unit according to claim 1, **characterized in that** it comprises a transceiver (13) for acoustic pulses and echoes, known as sonar, for connection to a support vessel when used underwater.

11. A method for sensing and processing data in a portable unit for detecting a position with respect to a reference, particularly for substantially shielded environments, according to claim 1, which comprises the steps of:

    - entering (14) coordinates of an initial point by means of said data input interface (7a),
    - acquiring (16, 17) instantaneously data, by means of the at least one accelerometer (4) and device (3) for three-dimensional orientation with respect to geographical references,
    - calculating (7) an instantaneous position, by means of the processor (2), by applying the formulas

$$x(t) = x_0 + V_{0x} * t + 1/2\ a_x * t^2$$

$$y(t) = y_0 + V_{0y} * t + 1/2\ a_y * t^2$$

$$z(t) = z_0 + V_{0z} * t + 1/2\ a_z * t^2$$

    where $x_0$, $y_0$ and $z_0$ are initial coordinates, $V_{0x}$, $V_{0y}$ and $V_{0z}$ are initial speeds, and $a_x$, $a_Y$ and $a_z$ are sensed accelerations,
    - showing on the screen the coordinates x(t), y(t) and z(t) calculated instantaneously.

12. The method according to claim 11, **characterized in that** the data are acquired also by a depth gauge (9), the data supplied by the depth gauge (9) being adapted for comparing the coordinate along a vertical axis.

13. The method according to claim 11, **characterized in that** the data are acquired also by a temperature sensor (8), the data supplied by the temperature sensor (8) being adapted for thermal compensation.

14. The method according to claim 11, **characterized in that** the data are also acquired by an acoustic signal receiver (13b), the data acquired by the receiver (13b) being adapted for error compensation based on the distance from the reference point.

**15.** The method according to claim 11, **characterized in that** the data are also sent by means of an acoustic signal transmitter (13a) to a support vessel (B) for correctly locating an underwater user (S) with respect to satellite signals (A) and signals of a beacon (C), in order to facilitate search and rescue operations.

Fig.1

Fig.2

Fig.3

Fig.4

Fig. 5

Fig. 6

**European Patent Office**

**EUROPEAN SEARCH REPORT**

Application Number

EP 05 11 0937

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 203 13 948 U1 (GOEDEKING, PHILIPP) 6 November 2003 (2003-11-06) | 1,3-6,8, 9,11,12 | G01C21/12 B63C11/02 |
| Y | * page 2, line 15 - page 4, line 6 * * figure 1 * | 10,14,15 | |
| X | DE 100 64 419 A1 (I-FOR-T GMBH) 4 July 2002 (2002-07-04) | 1,4-8, 10,11 | |
| Y | * column 1, paragraphs 13,14 * * column 2, paragraphs 16-23,26 * * column 3, paragraph 37 * | 14,15 | |
| X | US 2004/133346 A1 (BYE CHARLES T ET AL) 8 July 2004 (2004-07-08) * page 1, paragraphs 5-7,16 * * page 3, paragraph 42 * * figure 1 * | 1,4-8,11 | |
| X | US 6 546 336 B1 (MATSUOKA YOSHIO ET AL) 8 April 2003 (2003-04-08) * column 10, line 55 - column 11, line 2 * * column 11, line 40 - line 50 * * column 12, line 41 - column 13, line 17 * * column 14, line 35 - column 15, line 31 * * figures 1-4 * | 1,4-6,8, 9,11 | TECHNICAL FIELDS SEARCHED (IPC)  G01C B63C |
| X | EP 1 253 404 A (LADETTO, QUENTIN; GABAGLIO, VINCENT; VAN SEETERS, JOSEPHUS) 30 October 2002 (2002-10-30) * page 2, paragraph 1 * * page 3, paragraph 12 * * page 8, paragraph 65 - page 9, paragraph 74 * * page 17, paragraph 160 - paragraph 165 * * figures 1,11 * | 1,2,4-9, 11,13 | |

-/--

The present search report has been drawn up for all claims

| Place of search | Date of completion of the search | Examiner |
|---|---|---|
| The Hague | 6 March 2006 | Yosri, S |

EPO FORM 1503 03.82 (P04C01)

European Patent
Office

**EUROPEAN SEARCH REPORT**

Application Number

EP 05 11 0937

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/020951 A (VITEC CO LTD) 11 March 2004 (2004-03-11) * the whole document * | 1-6,8,9, 11-13 | |
| P,X | -& EP 1 536 207 A1 1 June 2005 (2005-06-01) * figure 1 * * page 3, paragraph 12 - paragraph 14 * ----- | 1-6,8,9, 11-13 | |
| Y | EP 0 508 819 A (ABBOTSBURY SOFTWARE LIMITED) 14 October 1992 (1992-10-14) * page 2, line 1 - line 16 * * page 4, line 4 - line 34 * * page 5, line 9 - line 12 * * figure 1 * ----- | 10,14,15 | |
| A | US 2004/022129 A1 (MCGEEVER JOHN F ET AL) 5 February 2004 (2004-02-05) * the whole document * ----- | 1,11,15 | |
| | | | TECHNICAL FIELDS SEARCHED (IPC) |

The present search report has been drawn up for all claims

| Place of search | Date of completion of the search | Examiner |
|---|---|---|
| The Hague | 6 March 2006 | Yosri, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                       

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 11 0937

This annex lists the patent family members relating to the patent documents cited in  the above-mentioned European search report.
The members are as contained in the European Patent Office EDP file on
The European Patent Office is in no way liable for these particulars which are merely  given for the purpose of information.

06-03-2006

| Patent document cited in search report | | Publication date | Patent family member(s) | | Publication date |
|---|---|---|---|---|---|
| DE 20313948 | U1 | 06-11-2003 | NONE | | |
| DE 10064419 | A1 | 04-07-2002 | NONE | | |
| US 2004133346 | A1 | 08-07-2004 | EP 1585939 A2 | | 19-10-2005 |
| | | | WO 2004063669 A2 | | 29-07-2004 |
| US 6546336 | B1 | 08-04-2003 | DE 19946212 A1 | | 20-04-2000 |
| | | | JP 3532773 B2 | | 31-05-2004 |
| | | | JP 2000097722 A | | 07-04-2000 |
| EP 1253404 | A | 30-10-2002 | AU 781848 B2 | | 16-06-2005 |
| | | | AU 3561502 A | | 24-10-2002 |
| | | | CA 2382999 A1 | | 23-10-2002 |
| | | | US 2003018430 A1 | | 23-01-2003 |
| WO 2004020951 | A | 11-03-2004 | AU 2003257664 A1 | | 19-03-2004 |
| | | | CN 1678884 A | | 05-10-2005 |
| | | | EP 1536207 A1 | | 01-06-2005 |
| EP 1536207 | A1 | 01-06-2005 | AU 2003257664 A1 | | 19-03-2004 |
| | | | CN 1678884 A | | 05-10-2005 |
| | | | WO 2004020951 A1 | | 11-03-2004 |
| EP 0508819 | A | 14-10-1992 | GB 2254716 A | | 14-10-1992 |
| US 2004022129 | A1 | 05-02-2004 | NONE | | |

EPO FORM P0459

For more details about this annex : see Official Journal of the European Patent Office, No. 12/82